Europäisches Patentamt

European Patent Office

Office européen des brevets

(19)

(11) Veröffentlichungsnummer: **0 255 889 B1**

(12) **EUROPÄISCHE PATENTSCHRIFT**

(45) Veröffentlichungstag der Patentschrift: 25.09.91

(51) Int. Cl.⁵: **C08F 220/44, C08L 33/20,** //(C08F220/44,212:12)

(21) Anmeldenummer: 87110465.9

(22) Anmeldetag: 20.07.87

Die Akte enthält technische Angaben, die nach dem Eingang der Anmeldung eingereicht wurden und die nicht in dieser Patentschrift enthalten sind.

(54) Verfahren zur Herstellung von binären Alpha-Methylstyrol-Acrylnitril-Harzen durch mehrstufige Massepolymerisation.

(30) Priorität: 02.08.86 DE 3626319

(43) Veröffentlichungstag der Anmeldung:
17.02.88 Patentblatt 88/07

(45) Bekanntmachung des Hinweises auf die Patenterteilung:
25.09.91 Patentblatt 91/39

(84) Benannte Vertragsstaaten:
DE FR GB IT NL

(56) Entgegenhaltungen:
DE-A- 2 411 180
DE-A- 2 540 517
DE-A- 2 809 180

(73) Patentinhaber: **BAYER AG**

W-5090 Leverkusen 1 Bayerwerk(DE)

(72) Erfinder: **Wingler, Frank, Dr.**
**Walter Flex-Str. 17**
**W-5090 Leverkusen 1(DE)**
Erfinder: **Sümmermann, Klaus, Dr.**
**Wolfskaul 12**
**W-5000 Köln 80(DE)**
Erfinder: **Wassmuth, Gerd, Dr.**
**Paul Klee-Str. 68**
**W-5090 Leverkusen 1(DE)**
Erfinder: **Pischtschan, Alfred, Dr.**
**Zur Eiche 33**
**W-5067 Kürten(DE)**
Erfinder: **Döring, Joachim, Dr.**
**Am Alten Broich 22**
**W-4018 Langenfeld(DE)**

## Beschreibung

Die Erfindung betrifft ein Verfahren zur Herstellung von thermoplastischen α-Methylstyrol/Acrylnitril Copolymerisaten durch kontinuierliche Massepolymerisation von α-Methylstyrol und Acrylnitril in Gegenwart von Radikale liefernden, die Polymerisation auslösenden Initiatoren in mindestens zwei in Serie geschalteten, kontinuierlich betriebenen, durchmischten Tankreaktoren, wobei ein bestimmter molarer Anteil an Acrylnitril pro Zeiteinheit aus dem Siedekühler des zweiten kontinuierlich betriebenen Tankreaktors entnommen und in den ersten kontinuierlich betriebenen Tankreaktor zurückgeführt wird, sowie die nach dem Verfahren hergestellten Copolymerisate. Das Verfahren liefert bei geringem technischen Aufwand und hoher Wirtschaftlichkeit Copolymerisate mit hoher molekularer und chemischer Einheitlichkeit, die in Abmischung mit Pfropfkautschuk Formmassen hoher Wärmeformbeständigkeit und Schlagzähigkeit ergeben.

Copolymerisate aus α-Methylstyrol und Acrylnitril sind bekannt, vgl. EP O 107 795; Makromolekulare Chemie 103 (1967) 188.

Die kontinuierliche Massepolymerisation von α-Methylstyrol und Acrylnitril in Gegenwart von radikalisch zerfallenden, monomerlöslichen Initiatoren ist ebenfalls bekannt. So beschreibt u.a. die DE-AS 2 809 180 ein Verfahren zur Herstellung von Copolymerisaten mit bevorzugt 68 bis 72 Gew.-% α-Methylstyrol (der Rest ist Acrylnitril), entsprechend einer molaren Zusammensetzung von 48,9 bis 53,6 Mol-% α-Methylstyrol und 51,1 bis 46,4 Mol-% Acrylnitril bei hoher relativer Raumzeitausbeute in Gegenwart von Azoinitiatoren mit Halbwertszeit von kleiner als 30 Minuten.

Die DE-AS 2 809 180 enthält keine Angaben über die absoluten mittlere Verweilzeit der kontinuierlichen Polymerisation. Es werden nur relative Raumzeitausbeuten, bezogen auf den Versuch 1, S. 4 angeben. Eine Nacharbeitung des Versuchs 3, S. 4 ergab, daß bei einer Polymerisationstemperatur von 105°C unter Zusatz von 0,15 Gew.-% Azodiisobuttersäuredinitril zu einer Mischung, bestehend aus 31,3 Gew.-% Acrylnitril und 63,8 Gew.-% α-Methylstyrol zusammen mit 4,75 Gew.-% Ethylbenzol, in nur einem kontinuierlich durchflossenen Rührkesselreaktor eine mittlere Verweilzeit von 6 bis 8 Stunden notwendig ist, um einen Umsatz von 50 bis 60 Gew.-% zu erzielen. Die Intrinsicviskosität des in einem Entgasungsextruder von Monomeren und Lösungsmittel befreiten Polymerisats liegt bei 40 bis 45 ml/g, gemessen bei 25°C in Dimethylformamid; α-Methylstyrol/Acrylnitril Copolymerisate mit Intrinsicviskositäten unter 50 ml/g ergeben aber in Mischungen mit Pfropfkautschuken thermoplastische Formmassen ungenügender Kerbschlagzähigkeit.

Die DE-PS 2 540 517 beschreibt ein Verfahren zur Herstellung von chemisch einheitlichen Massecopolymerisaten aus Monomeren unterschiedlicher Reaktivität durch zumindest eine zweistufige Polymerisation in einem durchmischten Tankreaktor und einem in Serie geschalteten Polymerisationskneter bestimmter Bauart, wobei in die zweite Verfahrensstufe gezielt Monomere nachdosiert werden.

Die Patentschrift 150 617 der Deutschen Demokratischen Republik beschreibt ebenfalls ein mehrstufiges Herstellungsverfahren nach dem Prinzip der Massepolymerisation in einer Rührkesselkaskade mit Zwischeneinspeisung von Monomeren, z.B. die Copolymerisation von Styrol mit Acrylnitril bei 60°C in Gegenwart von Azodiisobuttersäuredinitril zu Produkten enger Molmassenverteilung.

In der DE-OS 2 411 180 wird ebenfalls ein mehrstufiges Verfahren zur kontinuierlichen Block (Masse)-polymerisation von polyalkenyl-aromatischen Monomeren beschrieben, wobei kondensierte flüssige Monomere des zweiten Reaktors im Kreislauf in die erste Reaktionszone zurückgeführt werden. In den Ausführungsbeispielen wird lediglich die Polymerisation von Vinylaromaten und deren Gemische wie Styrol und α-Methylstyrol beschrieben, jedoch keine mengenmäßigen Angaben zu einer binären α-Methylstyrol/Acrylnitril-Copolymerisation gemacht.

Es hat sich nun gezeigt, daß auch bei Verwendung von Azodiisobuttersäuredinitril als die Polymerisation auslösender Initiator für die Copolymerisation von α-Methylstyrol und Acrylnitril sehr lange Verweilzeiten benötigt werden und dementsprechend die absoluten Raumzeitausbeuten gering sind. Bei langen Verweilzeiten werden auch Oligomere vom Tetralin-Typ gebildet, die die Wärmeformbeständigkeit der Copolymerisate verschlechtern.

Da auch Polymerisationsverfahren in in Serie geschalteten Reaktoren mit Zwischeneinspeisung von Monomeren nicht befriedigen, war es überraschend, daß die Polymerisation in mindestens zwei in Serie geschalteten Rührkesseln (durchmischte, kontinuierlich betriebene Tankreaktoren), wobei aus dem Siedekühler des zweiten Rührkessels pro Zeiteinheit eine bestimmte molare Menge an Acrylnitril entnommen und in der ersten Rührkessel zurückgeführt wird, bei verkürzter Verweilzeit verbesserte Copolymerisate ergibt.

Gegenstand der Erfindung ist ein Verfahren zur Herstellung von thermoplastischen Copolymerisaten von α-Methylstyrol und Acrylnitril durch kontinuierliche Masse-Copolymerisation von

A. 30 bis 50 Mol-% α-Methylstyrol und

B. 70 bis 50 Mol-% Acrylnitril

2

bei Temperaturen von 60 bis 120°C und mittleren Verweilzeiten von 4 bis 12 Stunden in Gegenwart von Radikale liefernden Initiatoren in mindestens zwei in Serie angeordneten kontinuierlich betriebenen, durchmischten Tankreaktoren, wobei der zweite Tankreaktor mit einem Siedekühler versehen ist, das dadurch gekennzeichnet ist, daß man kontinuierlich in den ersten Tankreaktor 100 Mol-Teile einer Monomermischung aus

Ao. 34 bis 52 Mol-% $\alpha$-Methylstyrol und

Bo. 66 bis 48 Mol-% Acrylnitril

pro Zeiteinheit einspeist und unter Rückvermischung bis zu einem Umsatz von 5 bis 30 Mol-Teilen zu einem Copolymerisat der Zusammensetzung

$A_1$. 49 bis 53 Mol-% $\alpha$-Methylstyrol und

$B_1$. 51 bis 47 Mol-% Acrylnitril

copolymerisiert, die Mischung, bestehend aus 70 bis 95 Mol-Teilen der Monomeren A und B, sowie 5 bis 30 Mol-Teilen des Copolymerisates der Zusammensetzung $A_1$-$B_1$ kontinuierlich in den zweiten Tankreaktor überführt und bei einem weiteren Umsatz von 5 bis 55 Mol-Teilen, wobei ein Endumsatz von 20 bis 60 Mol-Teilen erreicht wird, zu weiterem Copolymerisat der Zusammensetzung

$A_1$. 49 bis 53 Mol-% $\alpha$-Methylstyrol und

$B_1$. 51 bis 47 Mol-% Acrylnitril

polymerisiert, wobei man pro Zeiteinheit 0,5 bis 11,5 Mol-Teile Acrylnitril aus dem Siedekühler des zweiten Tankreaktors entnimmt und in den ersten Tankreaktor zurückführt.

Ein weiterer Gegenstand der Erfindung sind die nach diesem Verfahren erhältlichen thermoplastischen Copolymerisate von $\alpha$-Methylstyrol und Acrylnitril der Glasübergangstemperature von 118 bis 125°C, einer Viskositätszahl von größer als 50 ml/g, gemessen bei 25°C in Dimethylformamid, und einem Oligomerengehalt von weniger als 1,5 Gew.-% bestehend aus:

$A_1$. 49 bis 53 Mol-% $\alpha$-Methylstyrol und

$B_1$. 51 bis 47 Mol-% Acrylnitril.

Unter Mol-Teilen wird die Molmenge, ausgedrückt in Gramm (g), multipliziert mit einem beliebigen Faktor verstanden.

Die Polymerisation von $\alpha$-Methylstyrol und Acrylnitril wird kontinuierlich in homogener Phase durchgeführt. Dazu werden in einen Reaktor kontinuierlich die Monomeren und eventuell Hilfsstoffe mit konstanter Fördergeschwindigkeit eingetragen, in demselben Maß wird Reaktionsprodukt abgezogen, so daß sich in dem Reaktor ein zeitlich konstanter Füllgrad einstellt. "Homogen" bedeutet, daß es sich hier um ein einphasiges System handelt. Das gebildete Polymerisat ist im Restmonomergemisch homogen löslich. Auch die Monomeren sind in dem Reaktionsgemisch homogen löslich. Bei der homogenen Massepolymerisation wirken die nicht umgesetzten Monomeren als Lösungsmittel für das gebildete Polymerisat.

Oft empfiehlt es sich, bei der Massepolymerisation eine geringe Menge an Lösungsmittel zuzusetzen, z.B. 2 bis 30 Gew.-% Methylethylketon oder Ethylbenzol.

Diese, die Viskosität herabsetzenden Zusätze werden im Anschluß an die Polymerisation zusammen mit den nicht umgesetzten Monomeren entfernt. Der Anteil von $\alpha$-Methylstyrol in der Monomerausgangsmischung $A_o$ $B_o$ von 34 bis 52 Mol-% ist kritisch. Bei einem Anteil von über 52 Mol-% $\alpha$-Methylstyrol fällt mit steigendem Anteil die Molmasse des gebildeten Polymerisates rapide ab, zu erkennen in einem Abfall der Intrinsicviskosität unter 50 ml/g, gemessen bei 25°C in Dimethylformamid (DMF). Dies macht sich in verschlechterter mechanischer Festigkeit von Mischungen der erfindungsgemäß hergestellten Copolymerisate mit Pfropfkautschuken bemerkbar.

Die Polymerisation wird bei 60 bis 120°C, bevorzugt 80 bis 110°C und mittleren Verweilzeit von 4 bis 12 Stunden, bevorzugt 4 bis 6 Stunden durchgeführt. Der stationäre Umsatz über beide Polymerisationsstufen beträgt 20 bis 60 Mol-%, bevorzugt 30 bis 50 Mol-%, und die absoluten Raumzeitausbeuten ca. 0,5 bis 1,5

$$\frac{Mol}{Liter \cdot Stunde}$$

Die Kombination einer Polymerisationstemperatur von 80 bis 110°C, mit einer Verweilzeit von 4 bis 6 Stunden und dem stationären Umsatz von 30 bis 50 Mol-% ist zur Erzielung besonders vorteilhafter, technisch interessanter $\alpha$-Methylstyrol/Acrylnitril Copolyperisate bevorzugt. Eine Polymerisationstemperatur über 120°C, ein stationärer Umsatz von über 60 Mol-% und eine mittlere Verweilzeit unter 4 Stunden ergeben Copolymerisate mit geringen Molmassen und deren Mischungen mit Pfropfkautschuken geringe

3

EP 0 255 889 B1

mechanische Festigkeit.

Die Polymerisation wird unter Mitverwendung von Radikal-Ketten-Polymerisationen auslösenden Initiatoren durchgeführt. Das können Azoverbindungen, Peroxide, Licht und hochenergetische Strahlen sein.

Thermisch in Radikale zerfallende Initiatoren, z.B. Azo-Verbindungen, Peroxide oder sterisch gehinderte Kohlenwassserstoffe sollen bei der maximalen Polymerisationstemperatur von 120 °C eine Halbwertszerfallzeit von kürzer als 60 Minuten haben, um zu vermeiden, daß sich nicht zerfallende Initiatoranteile im Reaktionsgut ansammeln können, die bei der Aufarbeitung eine unerwünschte Nachpolymerisation auslösen können, oder bei kleinen Störungen ein Durchgehen der Polymerisation bewirken.

Als Initiatoren kommen z.B. in Frage:

tert.-Butylperoctoat

Benzoylperoxid

Dilauroylperoxid

tert.-Butylperpivalat

Azo-bis(isobutyronitril)

Di-tert.-butylperoxi-3,3,5-trimethylcyclohexan

Di-tert.-butyl-peroxi-hexahydroterephthalat

2,5-Dimethylhexan-2,5-diperbenzoat

t-Butyl-per-2-ethylhexanoat

Azo-bis(2,4-dimethylvaleronitril)

2,5-Dimethyl-2,5-di-(tert.-butylperoxid)-hexan

Dioctanoylperoxid

t-Butylperneodecanoat

Diisopropyl-peroxydicarbonat.

Die Polymerisation kann auch durch Licht- und Photoinitiatoren ausgelöst werden, wie beispielsweise in DE-OS 2 523 507 und DE-OS 2 600 318 beschrieben.

Photoinitiatoren sind organische und anorganische Verbindungen, die in Gegenwart von UV- oder sichtbarem Licht in Radikale zerfallen. Solche Initiatoren sind von H.J. Hageman in Progress in Org. Coatings 13 (1985), S. 123-150, beschrieben. Die in Radikale zerfallenden, eine Radikalkettenpolymerisation auslösenden Initiatoren werden in Mengen von 0,01 bis etwa 0,5 Gew.-%, bevorzugt 0,02 bis 0,2 Gew.-%, bezogen auf das Monomerengemisch, eingesetzt.

Die Initiatoren können in dem ersten, oder auch in dem ersten und in dem zweiten Tankreaktor eingesetzt werden.

Die homogene Polymerisation kann auch in Gegenwart von die Viskosität herabsetzenden Zusätzen wie Methylethylketon, Ethylbenzol, Toluol, tert.-Butanol usw. in Mengen von 2 bis 30 Gew.-%, bezogen auf die Monomeren, durchgeführt werden. Dieser Zusatz, der bei Massepolymerisationen üblich ist, darf nur so weit mitverwendet werden, wie er die Polymerisation nicht allzusehr verlangsamt.

Die kontinuierliche Massepolymerisation wird in mindestens zwei, in Serie geschalteten durchmischten Tankreaktoren durchgeführt. Die Tankreaktoren besitzen mischende Elemente wie Rührer und/oder zusätzlich einen Loop. Bei Loopreaktoren wird zur besseren Durchmischung ein Teil des Reaktionsproduktes am Boden abgezogen und oben wieder eingespeist. Siehe hierzu die DE-OS 2 343 871. Die Polymerisation im zweiten Tankreaktor erfolgt vorteilhaft unter Siedekühlung. Methoden zur Siedekühlung von Polymerisationsverfahren sind von E.Heil, A. Smits, Chem. Ing. Techn. 46 (1974), Heft 5, S. 217 und in DE-AS 1 495 145 sowie DE-OS 2 504 659, 3 334 338, 3 237 076 und 3 430 247 beschrieben. Besonders vorteilhaft erweisen sich auf- oder absteigende Rückflußkühler oder absteigende Seitenarmkühler. Da Acrylnitril einen höheren Dampfdruck als $\alpha$-Methylstyrol besitzt, reichert sich Acrylnitril im Dampf und somit im Kühlerkondensat an. Erfindungsgemäß wird ein bestimmter molarer Anteil an Acrylnitril pro Zeiteinheit aus dem Kühler des zweiten Tankreaktors entnommen und in den ersten eingespeist. Die Entnahme soll 0,5 bis 11,5 Mol-Teile, vorzugsweise 2 - 9 Teile Acrylnitril pro Zeiteinheit, bezogen auf 100 Mol-Teile Ausgangsmonomere $A_o B_o$ betragen.

Es läßt sich nicht vermeiden, daß hierbei auch eine geringe Menge $\alpha$-Methylstyrol der zweiten Polymerisationsstufe entzogen wird, jedoch hat dies keinen störenden Einfluß auf die Polymerisation.

Durch die Rückführung von Acrylnitril aus der zweiten Stufe in die erste Stufe stellt sich in der ersten Stufe ein höherer Acrylnitrilgehalt B ein, als er der Ausgangsmischung $A_o B_o$ entspricht. Die Tatsache, daß bei der beanspruchten Momomerzusammensetzung AB $\alpha$-Methylstyrol gegenüber Acrylnitril bevorzugt in das Polymerisat $A_1 B_1$ eingebaut wird, ist es zuzuschreiben, daß es zu einer weiteren Anreicherung von Acrylnitril im ersten Reaktor kommt. Die zu dem Polymerisat $A_1 B_1$ führende Monomermischung AB ist daher Acrylnitril reicher als die Ausgangsmischung $A_o B_o$. Das gewünschte Produkt $A_1 B_1$ mit den vorteilhaften Eigenschaften wird nur in dem engen, beschriebenen Zusammensetzungsbereich unter Rückführung

4

von Acrylnitril in dem beschriebenen Umfang erhalten.

Die erfindungsgemäßen Harze zeichnen sich durch hohe chemische und molekulare Einheitlichkeit aus. Die Uneinheitlichkeit des molaren Gewichtes beträgt U = 0,7 bis 1,4, berechnet nach

$$U = \frac{\bar{M}_w}{\bar{M}_n} - 1$$

($\bar{M}_w$ = Gewichtsmittel des Molekulargewichts;

$\bar{M}_n$ = Zahlenmittel des Molekulargewichts).

Die Wärmeformbeständigkeiten der reinen Harze liegen im Bereich von 118 bis 125°C, gemessen nach Vicat B und der Gehalt an Oligomeren vom Tetralintyp unter 1,5 %, bevorzugt unter 1 %.

Diese Copolymerisate können als Matrixharze zur Herstellung von schlagzähen wie wärmeformbeständigen Formmassen dienen. Man mischt meist die Copolymerisate als Harzphase mit einem Pfropfkautschuk in der Schmelze in Knetern, Innenmischern, auf Walzen oder Extrudern.

Geeignete Pfropfkautschuke sind bekannt. Sie können erhalten werden durch Pfropfpolymerisation von Styrol und gegebenenfalls α-Methylstyrol, mit Acrylnitril in Gegenwart einer Kautschukgrundlage. Die Grundlage bezeichnet man auch als Pfropfsubstrat. Man beobachtet, daß bei der Pfropfung auf dem Substrat nicht die gesamten Monomeren aufgepfropft werden, sondern daß ein Teil der Monomeren zu freiem Harz polymerisiert. Diese Pfropfpolymerisate können in bekannnter Weise durch radikalische Polymerisation der Monomeren in Gegenwart des Kautschuks in Substanz, Emulsion, Suspension, Lösung, sowie durch kombinierte Verfahren wie Masse/Suspensionspolymerisation oder Lösungs/ Fällungspolymerisation hergestellt werden.

Als Pfropfgrundlage werden Natur- und Synthesekautschuke verwendet. Geeignete Synthesekautschuke sind Homo-und Copolymerisate von gegebenenfalls halogensubstituierten, konjugierten Dienen mit 4 bis 8 Kohlenstoffatomen wie Butadien, Isopren, Chloropren und deren Copolymerisate mit Styrol und/oder Acrylnitril. Die Copolymerisate können statistisch oder blockartig aufgebaut sein. Bei blockartigen Produkten kann es sich um Zweiblockpolymere der Form AB oder auch um Dreiblockpolymere der Form ABA, sowie um sternförmige Blockpolymere etwa der Formel (ABA)$_x$Y handeln, wobei A z.B. für Polystyrol, B für Polybutadien und Y für ein mehrfunktionelles Kupplungsreagenz, wie z.B. SiCl$_4$, S$_2$Cl$_2$, Divinylbenzol, epoxidierte Fettsäuren u.a. steht; x liegt in der Größenordnung von 2 bis 5. In den Polybutadienen können 85 % oder mehr der Doppelbindungen 1,4-Bindungen sein (und in der Kette liegen) und von diesen wieder 95 % oder mehr cis-Konfiguration besitzen; der Anteil an 1,2-Vinyl-Doppelbindungen kann bis 15 %, bezogen auf alle Doppelbindungen, betragen. Styrol-Butadien-Blockcopolymere mit einem Styrolanteil von 5 bis 45 Gew.-% sind ebenfalls geeignet. Eine weitere Klasse der Synthesekautschuke besteht aus Ethylen-Propylen-Co-und Terpolymeren. Sie enthalten 70 bis 30 Gew.-Teile Ethylen auf 30 bis 70 Gew.-Teile Propylen. Vorteilhaft sind Terpolymere mit 4 bis 15 Gew.-% z.B. 5-Ethylidennorbornen, Dicyclopentadien, Hexadien-1,4, 2,2,1-Bicycloheptadien mit etwa 1 bis 20 C = C-Doppelbindungen pro 1000 Atome. Pfropfpolymerisate auf Basis dieser auch als EPDM-oder APTK-Kautschuke bezeichneten Elastomere zeichnen sich durch besonders gute Witterungsbeständigkeit aus. Zu den witterungsbeständigen Pfropfgrundlagen gehören ebenfalls Ethylenvinylacetat-Copolymerisate (EVA) und Acrylat-Elastomere. Die EVA-Elastomeren enthalten 30 bis 85 % einpolymerisiertes Vinylacetat und können zur besseren Bepfropfbarkeit mit ungesättigten Carbonsäuren, z.B. Acryl- oder Methacrylsäure, seitenständig verestert sein.

Die EVA-Copolymere können auch teilverseift sein mit OH-Zahlen von 1 bis etwa 100 mg KOH/g Substanz. Bei den Acrylatkautschuken handelt es sich meist um Copolymerisate von C$_2$-C$_8$-Alkylester der Acrylsäure wie z.B. Ethyl-, n-oder iso-Propyl-, n-Butyl-, iso-Butyl-, tert.-Butyl-, 2-Ethylhexyl-acrylat. Weitere Comonomere sind Acrylnitril, Methacrylate mit 1 bis 14 C-Atomen im Esterteil, Butadien, Vinylalkylether mit 1 bis 18 C-Atomen im Etherteil.

Die aus den erfindungsgemäßen Harzen und Pfropfkautschuken hergestellten schlagzähen Formmassen besitzen eine Wärmeformbeständigkeit von mindestens 108°C, vorzugsweise von 110 bis 120°C nach Vicat B. bei Kautschukgehalten ≤ 25 Gew.-Teile/100 Gew.-Teile Blend. Verglichen mit ABS-Formmassen auf Basis von durch Emulsionspolymerisation gewonnenen α-Methylstyrol/Acrylnitril-Copolymerisaten bei gleichem α-Methylstyrol-Anteil ist ihre praktische Wärmeformbeständigkeit um 2 bis 6°C höher. Auch besitzen die mit den erfindungsgemäßen Harzen hergestellten Formmassen einen helleren Roh-Farbton, eine bessere Fließfähigkeit bei der Verarbeitung und neigen weniger zur Verfärbung bei Temperaturbelastung. Formkörper zeichnen sich durch eine hervorragende Oberflächenqualität und geringe Spannungszustände bei hoher Schlagzähigkeit aus.

Den schlagzähen Formmassen können übliche Stabilisatoren, Lichtschutz-, Alterungsschutzmittel, Verlaufs- und Verarbeitungshilfsmittel, Füllstoffe, mineralische sowie organische Faser- und Verstärkungsfüllstoffe wie Glasfaser, Kohlenstoffaser, Metallwiskers, Polyester-, Polyamid-, Polyaramid-Faser und Pigmente zugesetzt sein. Die erfindungsgemäßen Formmassen sind insbesondere dort von Vorteil, wo es auf gute Wetterbeständigkeit, hohe Wärmeformbeständigkeit, hohe Zähigkeit und leichte Verarbeitbarkeit ankommt. So können sie beispielsweise mit Vorteil zur Herstellung von Rohrleitungen, von hochwertigen Dichtungen, von Geschirr, von heißdampfsterilisierbaren Geräten, von Waschmaschinenteilen, von Batteriekästen, von Trockenbatteriegehäusen, von Gehäusen und anderen isolierenden Teilchen in elektrisch betriebenen Maschinen, von Elektroisolierfolien, von verseifungsstabilen Behälterauskleidungen, chemisch und thermisch widerstandsfähigen Filtertüchern und vielen anderen Dingen verwendet werden. Bevorzugte Anwendungsgebiete sind der Bau von Fahrzeugteilen, Automobil-, Kraftrad-, Flugzeug-, Eisenbahnbau, die Herstellung von kompliziert geformten Spritzgußteilen, von denen eine hohe Wärmeformbeständigkeit verlangt wird, wie z.B. Kühlergrille, Kotflügeleinlagen, Innenverkleidungen, Armaturentafeln, Haltegriffe, Autodächer, Abdeckungen, Gehäuse von Haushaltsgeräten und von Büromaschinen.

## Beispiel

Als Reaktionsgefäß der ersten Polymerisationsstufe wird ein gefluteter Edelstahlreaktor mit 5,8 Liter Füllvolumen, beheizbarem Doppelmantel, Ankerrührer und Innentemperaturmessung benutzt. Zur besseren Durchmischung wird der Polymersirup ständig im Kreislauf über einen Loop gepumpt. Die Regelung der Innentemperatur erfolgt über die Wandtemperatur mit Wärmeüberträgeröl. In den Reaktor werden kontinuierlich 30,46 Mol/h (2,54 kg/h) Monomermischung der Zusammensetzung $A_o$ = 46,8 Mol-% (66 Gew.-%) α-Methylstyrol und $B_o$ = 53,2 Mol-% (34 Gew.-%) Acrylnitril mit 0,035 Gew.-% (bezogen auf die Momomermischung) Azobisisobutyronitril als Initiator von unten eingespeist. Über die Drucksteuerung der Austragspumpe wird im Reaktor ein Druck von 2 bar aufrechtgehalten. Die Ölmanteltemperatur liegt bei 105°C und die des Polymerisationsgutes bei 100°C. Das Reaktionsgemisch, von dem 14,4 Mol-% (15 Gew.-%) umgesetzt worden sind, wird dem Tankreaktor in demselben Maße entnommen und in die zweite Polymerisationsstufe überführt, wie frische Ausgangsmischung eingepumpt wird.

Die zweite Polymerisationsstufe besteht aus einem Edelstahltankreaktor mit 12 Liter Totalvolumen, beheizbarem Doppelmantel, Ankerrührer, Innentemperaturerfassung und Rückflußkühler mit Destillatentnahme. Zur besseren Durchmischung wird ständig am Boden des Reaktors Polymersirup entnommen und im Kreislauf (Loop) von oben wieder eingespeist. Die Temperaturregelung erfolgt durch Messen der Innentemperatur und Regelung der Siedekühlung über eine Druckregelung. In der zweiten Stufe wird die Polymerisation bis zu einem Umsatz von 38,8 Mol-% (40 Gew.-%) unter Zusatz von 0,075 Gew.-% (bezogen auf die eingesetzten Monomeren) Azobisisobutyronitril fortgeführt. Aus dem Rückflußkühler werden kontinuierlich 1,14 Mol/h Acrylnitril und 0,06 Mol/h α-Methylstyrol (Σ 67 g/h) entnommen und in die erste Polymerisationsstufe zurückgeführt. Die Polymerisationstemperatur beträgt 100°C, die Ölmanteltemperatur 115°C und das Füllvolumen 9,5 Liter.

Der Polymersirup wird anschließend in einem Entgasungsextruder von den nicht umgesetzten Monomeren befreit. Diese können eventuell nach einer Aufarbeitung der Ausgangsmonomermischung unter Berücksichtigung der Konzentration zugeführt werden. Die Analytik des hergestellten Harzes erfolgt an Granulat oder an Spritzgußkörpern.

Die Bestimmung der Eigenschaften erfolgte nach folgenden Methoden:
Schlagzähigkeit $a_n$ nach DIN 53453,
Kerbschlagzähigkeit $a_k$ nach DIN 53453,
Streckspannung $\sigma_s$ nach DIN 53455,
Streckdehnung $\epsilon_s$ nach DIN 53455,
Kugeldruckhärte H 30 nach DIN 53456,
Schmelzindex MFI nach DIN 53735,
Vicat Erweichungstemperatur VST/B120 nach DIN 53460
Eigenschaften des so hergestellten Harzes:
Molekulare Uneinheitlichkeit: $M_w/M_n$ - 1 : 0,9
Intrinsicviskosität: 54 ml/g gemessen bei 25°C in DMF

H 30: 163 N/mm$^2$
Vicat: 120°C

Herstellung der Abmischungen

25 Teile Pfropfkautschuk, hergestellt durch Pfropfung von 50 Teilen Styrol und Acrylnitril im Verhältnis 72/28 auf 50 Teile eines in Emulsion polymerisierten Polybutadiens, wobei der Teilchendurchmesser zwischen 0,1 und 0,4 µm liegt, werden mit 75 Teilen Harz unter Zusatz von 2 Teilen Gleitmittel gemischt und in einem Innenkneter compoundiert. Die Prüfkörper werden bei 240°C gespritzt.
Eigenschaften des Compounds:
$a_k$ (RT) 10,4 KJ/m$^2$
$a_k$ (-40°C) 5,2 KJ/m$^2$
$\sigma_s$ 54,8 N/mm$^2$
$\epsilon_s$ 3,1 %
H 30 118 N/mm$^2$
Vicat: 116°C
MFI 220/10: 3,5 g/10

**Patentansprüche**

1.  Verfahren zur Herstellung von thermoplastischen Copolymerisaten von α-Methylstyrol und Acrylnitril durch kontinuierliche Massecopolymerisation von
    A. 30 bis 50 Mol-% α-Methylstyrol und
    B. 70 bis 50 Mol-% Acrylnitril
    bei 60 bis 120°C und einer mittleren Verweilzeit von 4 - 12 Stunden in mindestens zwei kontinuierlich betriebenen, durchmischten Tankreaktoren, wobei der zweite Tankreaktor mit einem Siedekühler versehen ist, dadurch gekennzeichnet, daß man kontinuierlich in den ersten Tankreaktor 100 Mol-Teile einer Monomermischung aus
    $A_o$ 34 bis 52 Mol-% α-Methylstyrol und
    $B_o$ 66 bis 48 Mol-% Acrylnitril
    pro Zeiteinheit einspeist und unter Rückvermischung bis zu einem Umsatz von 5 bis 30 Mol-Teilen zu einem Copolymerisat der Zusammensetzung
    $A_1$. 49 bis 53 Mol-% α-Methylstyrol und
    $B_1$. 51 bis 47 Mol-% Acrylnitril
    copolymerisiert, die Mischung, bestehend aus 70 bis 95 Mol-Teilen der Monomeren A und B, sowie 5 bis 30 Mol-Teilen des Copolymerisates der Zusammensetzung $A_1$-$B_1$ kontinuierlich in den zweiten Tankreaktor überführt und dort bei einem weiteren Umsatz von 5 bis 55 Mol-Teilen, so daß ein Endumsatz von 20 bis 60 Mol-Teilen erreicht wird, zu weiterem Copolymerisat der Zusammensetzung
    $A_1$. 49 bis 53 Mol-% α-Methylstyrol und
    $B_1$. 51 bis 47 Mol-% Acrylnitril
    polymerisiert, wobei man pro Zeiteinheit 0,5 bis 11,5 Mol-Teile Acrylnitril aus dem Siedekühler des zweiten Tankreaktors entnimmt und in den ersten Tankreaktor zurückführt.

2.  Thermoplastische Copolymerisate von α-Methylstyrol und Acrylnitril der Glasübergangstemperatur von 118 bis 125°C, einer Viskositätszahl von größer als 50 ml/g, gemessen bei 25°C in Dimethylformamid, und einem Oligomerengehalt von weniger als 1,5 Gew.-% bestehend aus:
    $A_1$. 49 bis 53 Mol-% α-Methylstyrol und
    $B_1$. 51 bis 47 Mol-% Acrylnitril,
    erhältlich nach dem Verfahren gemäß Anspruch 1.

3.  Verwendung des Copolymerisates gemäß Anspruch 1 zur Herstellung von wärmeformbeständigen Formmassen mit Pfropfkautschuken.

**Claims**

1.  A process for the production of thermoplastic copolymers of α-methyl styrene and acrylonitrile by continuous bulk copolymerization of
    A. 30 to 50 mol-% α-methyl styrene and

B. 70 to 50 mol-% acrylonitrile

at 60 to 120°C over an average residence time of 4 to 12 hours in at least two continuously operated, mixed tank reactors, the second tank reactor being provided with a vapour condenser, characterized in that 100 mol parts of a monomer mixture of

$A_0$ 34 to 52 mol-% $\alpha$-methyl styrene and

$B_0$ 66 to 48 mol-% acrylonitrile

are fed continuously into the first tank reactor per unit of time and copolymerized with back-mixing up to a conversion of 5 to 30 mol parts to form a copolymer having the following composition:

$A_1$. 49 to 53 mol-% $\alpha$-methyl styrene and

$B_1$. 51 to 47 mol-% acrylonitrile,

the mixture consisting of 70 to 95 mol parts of the monomers A and B and 5 to 30 mol parts of the copolymer having the composition $A_1$-$B_1$ is continuously transferred to the second tank reactor where it is polymerized up to a further conversion of 5 to 55 mol parts, so that the final conversion is 20 to 60 mol parts, to form more copolymer having the composition

$A_1$. 49 to 53 mol-% $\alpha$-methyl styrene and

$B_1$. 51 to 47 mol-% acrylonitrile,

0.5 to 11.5 mol parts acrylonitrile per unit of time being removed from the vapour condenser of the second tank reactor and returned to the first tank reactor.

2. Thermoplastic copolymers of $\alpha$-methyl styrene and acrylonitrile having a glass transition temperature of 118 to 125°C, a viscosity number of greater than 50 ml/g, as measured in dimethyl formamide at 25°C, and an oligomer content of less than 1.5% by weight consisting of:

$A_1$. 49 to 53 mol-% $\alpha$-methyl styrene and

$B_1$. 51 to 47 mol-% acrylonitrile

obtainable by the process claimed in claim 1.

3. The use of the copolymer claimed in claim 1 for the production of heat-resistant molding compounds containing grafted rubbers.

**Revendications**

1. Procédé de production de copolymérisats thermoplastiques d'$\alpha$-méthylstyrène et d'acrylonitrile par copolymérisation continue en masse

A. de 30 à 50 moles % d'$\alpha$-méthylstyrène et

B. de 70 à 50 moles % d'acrylonitrile à 60-120°C pendant une durée moyenne de séjour de 4 à 12 heures

dans au moins deux réacteurs à cuve de brassage fonctionnant en continu, dont le second est muni d'un réfrigérant à évaporation, caractérisé en ce qu'on injecte en continu dans le premier réacteur à cuve 100 parties molaires d'un mélange de monomères comprenant

$A_0$ 34 à 52 moles % d'$\alpha$-méthylstyrène et

$B_0$ 66 à 48 moles % d'acrylonitrile

par unité de temps, et on copolymérise le mélange avec remélangeage jusqu'à un degré de 5 à 30 parties molaires en un copolymérisat de composition

$A_1$. 49 à 53 moles % d'$\alpha$-méthylstyrène et

$B_1$. 51 à 47 moles % d'acrylonitrile,

on transfère le mélange constitué de 70 à 95 parties molaires des monomères A et B ainsi que de 5 à 30 parties molaires du copolymérisat de composition $A_1$-$B_1$ en continu dans le second réacteur à cuve et on l'y polymérise jusqu'à un degré final de réaction de 20 à 60 parties molaires ait été atteint, en une quantité complémentaire de copolymérisat de composition

$A_1$ 49 à 53 moles % d'$\alpha$-méthylstyrène et

$B_1$ 51 à 47 moles % d'acrylonitrile,

cependant que l'on prélève par unité de temps 0,5 à 11,5 parties molaires d'acrylonitrile dans le réfrigérant à évaporation du second réacteur à cuve, que l'on recycle dans le premier réacteur à cuve.

2. Copolymérisats thermoplastiques d'$\alpha$-méthylstyrène et d'acrylonitrile ayant une température de transition vitreuse de 118 à 125°C, un indice de viscosité supérieur à 50 ml/g, mesuré à 25°C dans du diméthylformamide, et une teneur en oligomères de moins de 1,5 % en poids, constitués de :

$A_1$. 49 à 53 moles % d'$\alpha$-méthylstyrène et

$B_1$. 51 à 47 moles % d'acrylonitrile,
obtenus par le procédé suivant la revendication 1.

3. Utilisation du copolymérisat suivant la revendication 1 pour la production de matières à mouler douées de stabilité dimensionnelle à chaud, comportant des caoutchoucs greffés.